# EUROPÄISCHE PATENTANMELDUNG

(11) **EP 1 903 220 A2**
(43) Veröffentlichungstag der Anmeldung: **26.03.2008**
(21) Anmeldenummer: 07116118.6
(22) Anmeldetag: 11.09.2007
(51) Int. Cl.: F16B 13/06, F16B 13/08, F16B 13/14

(54) **Spreizanker**

(30) Priorität: 21.09.2006 DE 102006000475
(71) Anmelder: HILTI Aktiengesellschaft, 9494 Schaan (LI)
(72) Erfinder: Gonzalez, Rosa Maria, 6800, Feldkirch (AT); Hannoschoeck, Nikolaus, 9472, Grabs (CH); Noser, Otto, 9494, Schaan (LI); Sander, Bernhard, 81379, München (DE)
(74) Vertreter: Wildi, Roland

(57) **Zusammenfassung**

Ein Spreizanker (11) zur Verankerung in einem Bohrloch (7) weist als Ankerelemente ein Ankerteil (21) und eine Spreizhülse (13) auf. Das Ankerteil (21) weist eine erste axiale Längsbohrung (24), ein Lastangriffsmittel (25), einen ersten Abschnitt (26) und einen zweiten Abschnitt (27) sowie einen zwischen beiden Abschnitten (26, 27) liegenden, sich im Querschnitt vom ersten Abschnitt (26) zum zweiten Abschnitt (27) hin erweiternden Spreizabschnitt (22) auf. Die Spreizhülse (13) mit einer zweiten axialen Längsbohrung (14) ist auf dem ersten Abschnitt (26) des Ankerteils (21) geführt und weist einen dem Spreizabschnitt (22) zugewandten Spreizbereich (15) auf. In der Spreizhülse (13) sind Durchtrittsöffnungen (18) für eine aushärtbare Masse (31) angeordnet, die zu der zweiten axialen Längsbohrung (14) hin offen sind.

## Beschreibung

Die Erfindung betrifft einen Spreizanker zur Verankerung in einem Bohrloch mit als Ankerteil und als Spreizhülse ausgebildeten Ankerelementen. Das Ankerteil weist eine erste axiale Längsbohrung, ein Lastangriffsmittel, einen ersten Abschnitt und einen zweiten Abschnitt sowie einen zwischen beiden Abschnitten liegenden, sich im Querschnitt vom ersten Abschnitt zum zweiten Abschnitt hin erweiternden Spreizabschnitt auf. Die Spreizhülse ist mit einer zweiten axialen Längsbohrung auf dem ersten Abschnitt des Ankerteils geführt und weist einen dem Spreizabschnitt zugewandten Spreizbereich auf.

Spreizanker, der vorgenannten Art, werden zur nachträglichen Befestigung eines Anbauteils an einem Untergrund, z. B. ein Mauerwerk- oder Betonuntergrund, in ein zuvor in dem Untergrund erstelltes Bohrloch eingeführt und durch Verspreizen der Ankerelemente kraftschlüssig darin verankert. An dem aus dem Bohrloch herausragenden Abschnitt wird das zu befestigende Anbauteil an dem Untergrund festgelegt, wobei der Spreizanker direkt nach dem Setzen belastbar ist. Beispielsweise aus der WO 2005/031176 A1 ist ein derartiger Spreizanker bekannt.

Nachteilig an den bekannten Lösungen ist, dass zur Übertragung von hohen Lasten grosse Spreizkräfte in den Untergrund aufgebracht werden müssen. Entsprechend müssen die Rand- sowie die Achsabstände genügend gross gewählt werden, damit die wirkenden Kräfte sich nicht überlagern und zu einem Versagen der geschaffenen Befestigungen führen können. In den Spalt zwischen dem Spreizanker und der Bohrlochwandung können zudem für den Spreizanker schädliche Medien eindringen.

Aus der DE 103 60 156 A1 ist ein kraftschlüssig und stoffschlüssig verankerbarer Spreizanker bekannt, der eine Ankerstange mit einem Ankerteil und mit einem mit Vertiefungen versehenen Verankerungsbereich sowie eine Spreizhülse aufweist. Das Ankerteil weist einen sich im Querschnitt von einem ersten Abschnitt zu einem zweiten Abschnitt beziehungsweise in Richtung eines freien Endes der Ankerstange hin erweiternden Spreizabschnitt zum Aufweiten der Spreizhülse auf. Der Spreizanker wird in ein mit einem Mörtel als aushärtbare Masse befüllten Bohrloch eingeführt. Mittels einer axialen Verschiebung des Ankerteils entgegen der Setzrichtung wird dieses in die Spreizhülse hineingezogen, wobei sich der Spreizbereich der Spreizhülse aufweitet und die kraftschlüssige Verankerung des Spreizankers geschaffen wird. Der gesetzte Spreizanker ist anschliessend auf einem von der mechanischen Verankerung bestimmten Lastniveau sofort belastbar. Neben der direkten zumindest teilweisen Belastbarkeit wird bei diesem Spreizanker das Bohrloch durch den ausgehärteten Mörtel abgedichtet und nach dem vollständigen Aushärten des Mörtels werden die Verankerungswerte des Spreizankers erhöht. Somit reichen geringere von der kraftschlüssigen Verankerung erzeugte Spreizkräfte aus, um im Endzustand des gesetzten Spreizankers trotzdem die gewünschten Lastwerte zu erreichen.

Nachteilig an der bekannten Lösung ist, dass der Spreizvorgang des Spreizankers oftmals zu einem Zeitpunkt erfolgt, an dem der Mörtel bereits begonnen hat auszuhärten. Der Abbindevorgang des Mörtels wird beim Spreizvorgang der Spreizhülse gestört, was zu einer Reduktion der Verankerungswerte führt.

Aufgabe der Erfindung ist es, einen Spreizanker zu schaffen, der die vorgenannten Nachteile vermeidet und insbesondere nach dem Setzen sofort zumindest teilweise belastbar ist sowie hohe Lastwerte aufweist.

Die Aufgabe ist durch die Merkmale des unabhängigen Anspruchs gelöst. Vorteilhafte Weiterbildungen sind in den Unteransprüchen dargelegt.

Gemäss der Erfindung ist in wenigstens einem der Ankerelemente zumindest eine Durchtrittsöffnung für eine aushärtbare Masse angeordnet, die zu einer der axialen Längsbohrungen hin offen ist.

Die aushärtbare Masse, z. B. ein ein- oder mehrkomponentiger Mörtel oder Klebstoff, ist im unreagierten Zustand flüssig oder zumindest zähflüssig. Durch die Durchtrittsöffnung füllt die aushärtbare Masse bei einem Befüllen des Bohrlochs nach dem kraftschlüssigen Verankern des Spreizankers die verbleibenden Räume zwischen dem Spreizanker und der Bohrlochwandung beziehungsweise des Bohrlochgrundes aus. Bei einem Setzen des Spreizankers in ein zuvor mit der aushärtbaren Masse befülltes Bohrloch kann der verdrängte Anteil der aushärtbaren Masse durch die Durchtrittsöffnungen in die von dem Spreizanker umschlossenen Räume eintreten. Der Spreizanker ist nach dem Aushärten der aushärtbaren Masse weitgehend vollständig stoffschlüssig im Untergrund verankert. Der erfindungsgemässe Spreizanker zeichnet sich durch die Vorteile eines Verbundankers aus, wobei der Spreizanker direkt nach dem Verspreizen der Spreizhülse belastbar ist und im ausgehärteten Zustand der ausgehärteten Masse hohe Verankerungswerte erreicht.

Wird zur Schaffung der kraftschlüssigen Verankerung des Spreizankers die Spreizhülse über das Ankerteil geschoben, verschiebt sich das Ankerteil beim Aufweiten des Spreizbereichs der Spreizhülse nicht mehr in axialer Richtung und der Abbindevorgang der aushärtbaren Masse wird auch bei einem vorgängig befüllten Bohrloch nicht gestört, wobei die Erreichung maximaler Verankerungswerte gewährleistet ist. Dabei ist der Spreizanker direkt nach dem Setzvorgang auf einem von der mechanischen Verankerung bestimmten Lastniveau belastbar. Die im Montagezustand des festzulegenden Anbauteils auf den Spreizanker wirkenden Kräfte sind üblicherweise wesentlich geringer als die im anschliessenden Gebrauchszustand auftretenden Kräfte. Nach dem Aushärten der aushärtbaren Masse ist die Befestigungsanordnung vollständig auf einem erforderlichen hohen Lastniveau belastbar. Da die wirkenden Spreizkräfte des Spreizankers sich auf einem tiefen Niveau bewegen, lassen sich gegenüber einem nur kraftschlüssig verankerten Spreizanker bei gleicher Belastung geringe Rand- und Achsabstände realisieren.

Die erste axiale Längsbohrung im Ankerteil erstreckt sich in Richtung der Längsachse des Spreizankers und ist beispielsweise durchgehend ausgebildet. Vorteilhaft ist das Lastangriffsmittel als Gewindeabschnitt, z. B. als Innengewinde ausgebildet und zumindest abschnittsweise an der ersten axialen Längsbohrung angeordnet. Alternativ ist die erste axiale Längsbohrung eine Sacklochbohrung, welche zumindest abschnittsweise ein Lastangriffsmittel aufweist. Über das Lastangriffsmittel ist ein Befestigungsmittel, das ein auf das Lastangriffsmittel des Ankerteils abgestimmtes Verbindungsmittel aufweist, mit dem Ankerteil des Spreizankers verbindbar.

Der beim Spreizvorgang mit der Spreizhülse in Anlage kommende Spreizabschnitt des Ankerteils erweitert sich in Setzrichtung beziehungsweise in Richtung des zweiten Abschnitts des Ankerteils und ist beispielsweise konisch ausgebildet, wodurch eine einfache Aufweitung des Spreizbereichs der Spreizhülse beim Verspannen des Spreizankers gewährleistet ist. Alternativ kann der Spreizabschnitt des Ankerteils einen konkaven oder konvexen sowie auch einen diskontinuierlichen Verlauf aufweisen. Vorteilhaft ist das Befestigungsmittel eine Anker- oder Gewindestange, die ein komplementär zu einem Innengewinde als Lastangriffsmittel des Ankerteils ausgebildetes Aussengewinde aufweist.

Das Befestigungsmittel kann mit einer Längsbohrung versehen sein, durch welche eine Befüllung des Bohrlochs mit der aushärtbaren Masse auch bei einem bereits mit dem Spreizanker verbundenen Befestigungsmittels möglich ist. Ein solches Befestigungsmittel kann zudem entlang seiner Längserstreckung mit der Längsbohrung in Verbindung stehende Querbohrungen aufweisen, durch welche die der Längsbohrung zugeführte aushärtbare Masse in verschiedenen Bereichen des Bohrlochs austreten kann.

Zum Setzen eines erfindungsgemässen Spreizankers wird das Ankerteil in ein zuvor erstelltes und vorteilhaft gereinigtes Bohrloch eingeführt, bis dieses am Bohrlochgrund ansteht. Anschliessend wird die Spreizhülse mit dem Spreizbereich voran in das Bohrloch eingeführt und mittels eines Setzwerkzeugs, wie z. B. einem Hammer, in Richtung des Bohrlochgrundes auf das Ankerteil aufgeschoben, wobei der Spreizbereich der Spreizhülse von dem Spreizabschnitt des Ankerteils aufweitet wird. Beim Spreizvorgang treten keine axiale Verschiebungen des Ankerteils in Richtung der Längsachse des Spreizankers auf. Vorteilhaft weist der Spreizbereich Längsschlitze auf, so dass sich beim Aufweiten des Spreizbereichs mehrere Spreizlappen bilden, die mit der Bohrlochwandung in Anlage kommen und einen Kraftschluss zwischen der Bohrlochwandung und dem Spreizanker erzeugen. Nachher wird die aushärtbare Masse in das Bohrloch eingebracht, welche durch die zumindest eine Durchtrittsöffnung in den Ankerelementen in die verbleibenden Räume im Bohrloch eindringt und nach dem Aushärten der aushärtbaren Masse die stoffschlüssige Verankerung des Spreizankers sicherstellt. Anschliessend wird ein Befestigungsmittel mit einem komplementär zu dem Lastangriffsmittel des Ankerteils ausgebildeten Verbindungsabschnitt nach der Verfüllung des Bohrlochs mit der aushärtbaren Masse mit dem Ankerteil verbunden.

In einer alternativen Ausführungsform wird ein Befestigungsmittel vor dem Einführen des Ankerteils in das Bohrloch mit dem Ankerteil verbunden und mit diesem in das Bohrloch eingeführt, bis das Ankerteil oder, sofern die axiale Aufnahmebohrung im Ankerteil durchgängig ausgebildet ist und ein Ende des Befestigungsmittels gegenüber dem in Setzrichtung liegenden Ende beziehungsweise des zweiten Abschnitts des Ankerteils vorsteht, bis das entsprechende Ende des Befestigungsmittels am Bohrlochgrund ansteht. Anschliessend wird die Spreizhülse mit dem Spreizbereich voran in das Bohrloch eingeführt und verspannt sowie die aushärtbare Masse in das Bohrloch eingebracht. Durch die zumindest eine Durchtrittsöffnung in den Ankerelementen kann die aushärtbare Masse in die verbleibenden Räume eindringen, so dass die stoffschlüssige Verankerung der geschaffenen Befestigung auch bei dieser Alternative gewährleistet ist.

Die Aussenseiten der Ankerelemente sind beispielsweise glatt ausgebildet oder zumindest bereichsweise mit einer Struktur versehen, um die Verbindung zwischen der aushärtbaren Masse beziehungsweise mit dem Untergrund und den Ankerelementen zu verbessern. Beispielsweise sind die entsprechenden Flächen zur Schaffung einer Struktur aufgerauht oder mit Riefen versehen. Beispielsweise sind die Flächen der Ankerelemente, die beim Spreizvorgang miteinander in Anlage kommen, als glatte Oberfläche ausgebildet.

Vorzugsweise ist die zumindest eine Durchtrittsöffnung in der Spreizhülse angeordnet und verbindet die zweite axiale Längsbohrung mit der Aussenkontur des Spreizankers. Die zumindest eine Durchtrittsöffnung ist in einem Wandabschnitt der Spreizhülse vorgesehen, der zwischen der Aussenkontur der Spreizhülse und der zweiten axialen Längsbohrung vorhanden ist. Die zumindest eine Durchtrittsöffnung weist beispielsweise einen runden oder polygonalen Umriss auf. Vorteilhaft sind mehrere zueinander beabstandete Durchgangsöffnungen an der Spreizhülse vorgesehen. Die Durchgangsöffnungen weisen vorteilhaft alle die gleiche Ausgestaltung auf. Alternativ können die Durchgangsöffnungen einer Spreizhülse unterschiedliche Ausgestaltungen aufweisen.

Bevorzugt ist die zumindest eine Durchtrittsöffnung ausserhalb des Spreizbereichs angeordnet, so dass im verspreizten Zustand der Ankerelemente die zumindest eine Durchtrittsöffnung in der Spreizhülse nicht von dem Ankerteil vollkommen abgedeckt wird.

Vorzugsweise ist die zumindest eine Durchtrittsöffnung in dem Ankerteil angeordnet und verbindet die erste axiale Längsbohrung mit der Aussenkontur des Spreizankers. Vorteilhaft ist die zumindest eine Durchtrittsöffnung in einem Wandabschnitt des Ankerteils vorgesehen, der zwischen der Aussenkontur des Ankerteils und der ersten axialen Längsbohrung vorhanden ist. Die zumindest eine Durchtrittsöffnung weist beispielsweise einen runden oder polygonalen Umriss auf. Vorteilhaft sind mehrere zueinander beabstandete Durchgangsöffnungen in dem Ankerteil vorgesehen. Die Durchgangsöffnungen weisen vorteilhaft alle die gleiche Ausgestaltung auf. Alternativ können die Durchgangsöffnungen eines Ankerteils unterschiedliche Ausgestaltungen aufweisen.

Bevorzugt ist die zumindest eine Durchtrittsöffnung im zweiten Abschnitt des Ankerteils angeordnet, so dass im verspreizten Zustand der Ankerelemente die zumindest eine Durchtrittsöffnung im Ankerteil nicht von dem Spreizbereich der Spreizhülse vollkommen abgedeckt wird.

In einer weiteren, erfindungsgemässen Ausführungsform sind an der Spreizhülse sowie an dem Ankerteil jeweils zumindest eine und vorteilhaft jeweils mehrere Durchtrittsöffnungen angeordnet, womit eine vorteilhafte stoffschlüssige Verankerung des Spreizankers im Untergrund gewährleistet ist. Vorteilhaft sind bei einer solchen Ausführungsform die Durchführöffnungen in dem Ankerteil und in der Spreizhülse derart angeordnet, dass im verspreizten Zustand der Ankerelemente diese nicht von dem Ankerteil und/oder der Spreizhülse vollständig verschlossen werden. Alternativ können die Durchführöffnungen in dem Ankerteil und in der Spreizhülse derart angeordnet, dass diese sich im kraftschlüssig verankerten Zustand des Spreizankers zumindest ein teilweise überlappen und somit die aushärtbare Masse durch diese überlappenden Öffnungen in die verbleibenden Räume im Bohrloch fliessen kann.

Vorzugsweise ist die zumindest eine Durchtrittsöffnung eine Bohrung, welche einfach in der Spreizhülse und/oder in dem Ankerteil des Spreizankers erstellt werden kann.

Die Erfindung wird nachstehend anhand von zwei Ausführungsbeispielen näher erläutert. Es zeigen:
- Fig. 1: Einen Systemschnitt durch ein erstes Ausführungsbeispiel des erfindungsgemässen Spreizankers im in einem Untergrund verankerten Zustand; und
- Fig. 2: einen Schnitt durch ein zweites Ausführungsbeispiel eines Spreizankers.

Grundsätzlich sind in den Figuren gleiche Teile mit den gleichen Bezugszeichen versehen.

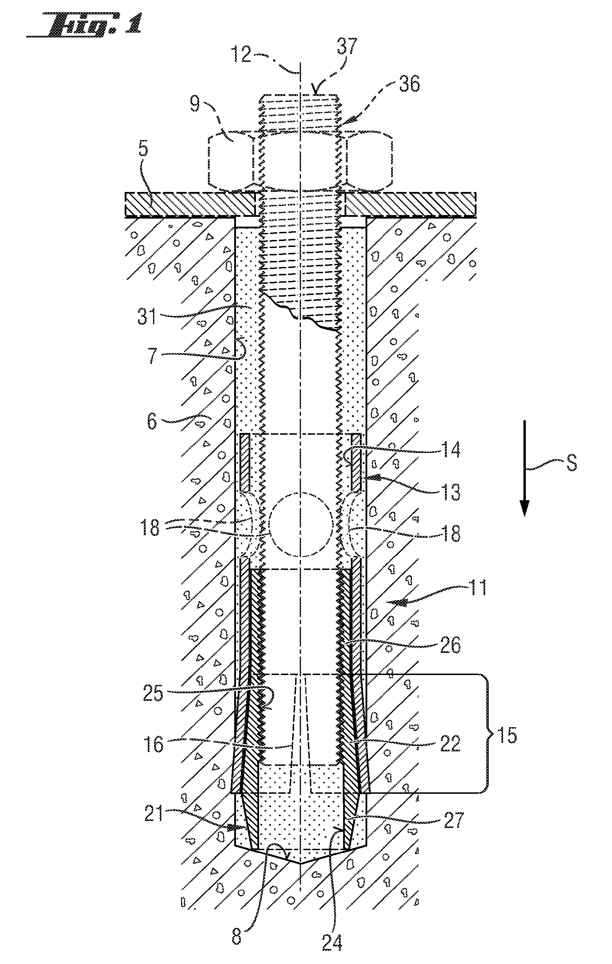

Der in Figur 1 dargestellte Spreizanker 11 zur Verankerung in einem Bohrloch 7 erstreckt sich entlang einer Längsachse 12 und weist als Ankerelemente ein Ankerteil 21 und eine Spreizhülse 13 auf. Das Ankerteil 21 weist eine erste axiale Längsbohrung 24, einen Innengewindeabschnitt als Lastangriffsmittel 25, einen ersten Abschnitt 26 und einen zweiten Abschnitt 27 sowie einen zwischen beiden Abschnitten 26 und 27 liegenden, sich im Querschnitt vom ersten Abschnitt 26 zum zweiten Abschnitt 27 hin erweiternden Spreizabschnitt 22 auf. Die Spreizhülse 13 ist mit einer zweiten axialen Längsbohrung 14 auf dem ersten Abschnitt 26 des Ankerteils 21 geführt und weist einen dem Spreizabschnitt 22 zugewandten, durch Schlitze 16 gebildeten Spreizbereich 15 auf. In der Spreizhülse 13 sind Durchtrittsöffnungen 18 für eine aushärtbare Masse 31 angeordnet, die zu der zweiten axialen Längsbohrung 14 hin offen sind, wobei die Durchtrittsöffnungen 18 die zweite axiale Längsbohrung 14 mit der Aussenkontur der Spreizhülse 13 und somit mit der Aussenkontur des Spreizankers 11 verbinden. Die Durchtrittsöffnungen 18 sind ausserhalb des Spreizbereichs 15 angeordnet. Die Durchtrittsöffnungen 18 sind Bohrungen im Wandabschnitt der Spreizhülse 13.

Zum kraft- und stoffschlüssigen Verankern des Spreizankers 11 wird ein Bohrloch 7 in den Untergrund 6 erstellt und anschliessend das Ankerteil 21 in das Bohrloch eingeführt, bis dieses am Bohrlochgrund 8 ansteht. Dann wird die Spreizhülse 13 mit dem Spreizbereich 15 voran in das Bohrloch 7 eingeführt und mittels einem hier nicht dargestellten Setzwerkzeug axial in Setzrichtung S auf das Ankerteil 21 aufgeschoben, wobei sich der Spreizbereich 15 aufweitet und der Spreizanker 11 wegkontrolliert kraftschlüssig im Untergrund 6 verankert wird. Anschliessend wird das Bohrloch 7 mit einer aushärtbaren Masse 31 befüllt, wobei die flüssige oder zumindest zähflüssige aushärtbare Masse 31 durch die Durchtrittsöffnungen 18 in die verbleibenden Räume im Bohrloch 7 fliessen kann. Dann wird eine Gewindestange als Befestigungselement 36 (gestrichelt dargestellt) mit einem komplementär zu dem Innengewinde des Ankerteils 21 ausgebildeten Aussengewinde als Verbindungsabschnitt in das Innengewinde des Ankerteils 21 eingeschraubt. Mittels einer auf das freie Ende 37 des Befestigungselements 36 aufgeschraubten Mutter 9 (gestrichelt dargestellt) wird ein Anbauteil 5 am Untergrund 6 festgelegt.

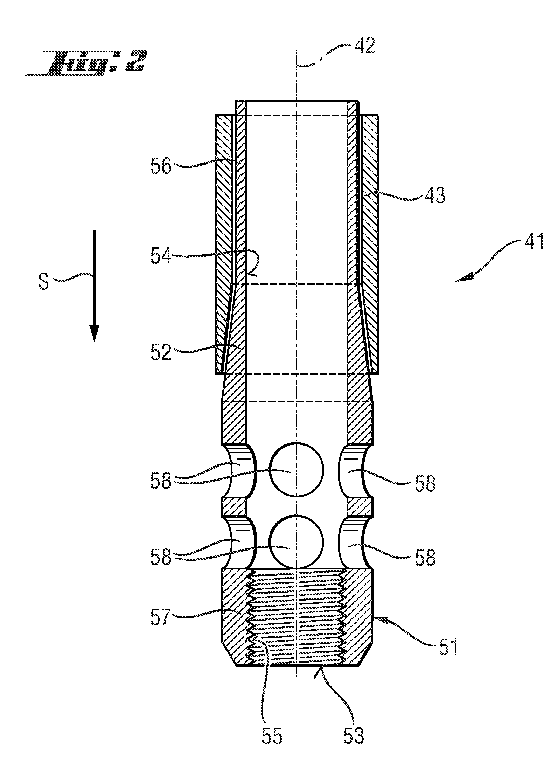

Bei dem in der Figur 2 gezeigten Spreizanker 41 sind mehrere axial und radial zueinander beabstandete Durchtrittsöffnungen 58 für die aushärtbare Masse an einem Ankerteil 51 vorgesehen, das einen ersten Abschnitt 56 und einen zweiten Abschnitt 57 sowie einen zwischen beiden Abschnitten 56 und 57 liegenden, sich im Querschnitt vom ersten Abschnitt 56 zum zweiten Abschnitt 57 hin erweiternden Spreizabschnitt 52 aufweist. Die Durchtrittsöffnungen 58 sind im zweiten Abschnitt 57 des Ankerteils 51 angeordnet und verbinden die erste axialen Längsbohrung 54 mit der Aussenkontur des Ankerteils 51 und somit mit der Aussenkontur des Spreizankers 41. Vom freien Rand 53 ausgehend erstreckt sich entgegen der Setzrichtung S über einen Bereich der ersten axialen Längsbohrung 54 ein Innengewinde als Lastangriffsmittel 55 für ein hier nicht dargestelltes Befestigungsmittel. Anschliessend an den Spreizabschnitt 52 schliesst sich ein erster Abschnitt 56 des Spreizteils 51 an, über den die Spreizhülse 43 geführt ist. Die axiale Erstreckung in Richtung der Längsachse 42 des Spreizabschnitts 52 und des ersten Abschnitt 56 ist grösser als die entsprechende Längserstreckung der Spreizhülse 43 ausgebildet.

## Patentansprüche

1. Spreizanker zur Verankerung in einem Bohrloch (7) mit als Ankerteil (21; 51) und als Spreizhülse (13; 43) ausgebildeten Ankerelementen,
bei dem das Ankerteil (21; 51) eine erste axiale Längsbohrung (24; 54), ein Lastangriffsmittel (25; 55), einen ersten Abschnitt (26; 56) und einen zweiten Abschnitt (27; 57) sowie einen zwischen beiden Abschnitten (26, 27; 56, 57) liegenden, sich im Querschnitt vom ersten Abschnitt (26; 56) zum zweiten Abschnitt (27; 57) hin erweiternden Spreizabschnitt (22; 52) aufweist und
bei dem die Spreizhülse (13; 43) mit einer zweiten axialen Längsbohrung (14) auf dem ersten Abschnitt (26; 56) des Ankerteils (21; 51) geführt ist und einen dem Spreizabschnitt (22; 52) zugewandten Spreizbereich (15) aufweist, **dadurch gekennzeichnet, dass**
in wenigstens einem der Ankerelemente zumindest eine Durchtrittsöffnung (18; 58) für eine aushärtbare Masse (31) angeordnet ist, die zu einer der axialen Längsbohrungen (14; 54) hin offen ist.

2. Spreizanker nach Anspruch 1, **dadurch gekennzeichnet, dass** die zumindest eine Durchtrittsöffnung (18) in der Spreizhülse (13) angeordnet ist.

3. Spreizanker nach Anspruch 2, **dadurch gekennzeichnet, dass** die zumindest eine Durchtrittsöffnung (18) ausserhalb des Spreizbereichs (15) angeordnet ist.

4. Spreizanker nach einem der Ansprüche 1 bis 3, **dadurch gekennzeichnet, dass** die zumindest eine Durchtrittsöffnung (58) in dem Ankerteil (51) angeordnet ist.

5. Spreizanker nach Anspruch 4, **dadurch gekennzeichnet, dass** die zumindest eine Durchtrittsöffnung (18) im zweiten Abschnitt (57) des Ankerteils (51) angeordnet ist.

6. Spreizanker nach einem der Ansprüche 1 bis 3, **dadurch gekennzeichnet, dass** die zumindest eine Durchtrittsöffnung (18; 58) eine Bohrung ist.
